# EUROPEAN PATENT APPLICATION

(11) **EP 3 930 163 A1**
(43) Date of publication of application: **29.12.2021**
(21) Application number: 21180172.5
(22) Date of filing: 17.06.2021
(51) Int. Cl.: H02M 3/158, H02M 1/00, H02M 1/14

(54) **DC-DC POWER CONVERTER**

(30) Priority: 23.06.2020 US 202016909538
(71) Applicant: GE Aviation Systems LLC, Grand Rapids, MI 49512 (US)
(72) Inventor: WANG, Ruxi, Grand Rapids, 49512 (US); ZHANG, Zheyu, Grand Rapids, 49512 (US)
(74) Representative: Openshaw & Co.

(57) **Abstract**

An interleaved DC-DC boost converter (291) is disclosed. The DC-DC converter (291) includes a filter portion (292) comprising first set of inductors (221) at a low voltage input (211) of the DC-DC power converter (291), a DC-DC converter portion (200) having a first and a second set of switches (251, 252) coupled to the filter portion (292), and a DC-link portion (293) coupled to the DC-DC converter portion (200), comprising a first and a second set of capacitors (231, 232). The DC-DC boost converter (291) further includes a coupled inductor portion (220) coupled to the DC-link portion (293) at a high voltage output (212) of said power converter (291), comprising a second set of coupled inductors (222, 223), each coupled inductor (222a, 222b) of the second set of coupled inductors (222) electrically in series with a respective inductor (221a, 221b)of the first set of inductors (221).

## Description

### TECHNICAL FIELD

The present disclosure relates to power converters and inverters for use in electric distribution systems.

### BACKGROUND

In the electric power industry, direct-current (DC) distribution systems, DC energy sources such as photovoltaic (PV) panels and fuel cells, and DC-based energy storage systems are increasingly deployed in a wide variety of applications that call for increased performance and power densities. In each of these technology areas, DC-DC converters, with the capability to handle high voltages and high currents are required. For example, symmetric interleaved boost DC-DC converters are often used in such systems due to their ability to decrease parasitic currents.

### BRIEF DESCRIPTION

In one aspect, the present disclosure relates to a DC-DC power converter having a set of interleaved phase legs. The DC-DC power converter includes a filter portion comprising first set of inductors at a low voltage input of the DC-DC power converter, a DC-DC converter portion comprising a first set of switches and a second set of switches coupled to the filter portion, a DC-link portion coupled to the DC-DC converter portion comprising a first and a second set of capacitors. The DC-DC power converter further includes a coupled inductor portion coupled to the DC-link portion at a high voltage output of the DC-DC power converter, comprising a second set of coupled inductors, each coupled inductor of the second set of coupled inductors electrically in series with a respective inductor of the first set of inductors.

In another aspect, the present disclosure relates to a power inverter. The power inverter includes a DC-DC power converter stage having a set of interleaved positive and negative voltage phase legs. The DC-DC power converter stage includes a filter portion comprising first set of inductors at a low-voltage input side of the DC-DC power converter, a DC-DC converter portion comprising a first set of switches and a second set of switches coupled to the filter portion, and a DC-link portion coupled to the switching portion DC-DC converter portion, comprising a first and a second set of capacitors. The DC-DC power converter further includes a coupled inductor portion coupled to the DC-link portion at a high-voltage output side of the DC-DC power converter, comprising a second set of coupled inductors, each coupled inductor of the second set of coupled inductors electrically in series with a respective inductor of the first set of inductors, and an inverter stage electrically connected with the coupled inductor portion to receive a DC voltage output (Vo) therefrom. These and other features, aspects and advantages of the present disclosure will become better understood with reference to the following description and appended claims. The accompanying drawings, which are incorporated in and constitute a part of this specification, illustrate aspects of the disclosure and, together with the description, serve to explain the principles of the disclosure.

### BRIEF DESCRIPTION OF THE DRAWINGS

A full and enabling disclosure of the present description, including the best mode thereof, directed to one of ordinary skill in the art, is set forth in the specification, which refers to the appended FIGS., in which:
FIG. 1 illustrates conventional interleaved DC-DC converter.
FIG. 2 illustrates an example schematic view of a power converter in accordance with various aspects described herein.
FIG. 3 is a more detailed schematic view of the DC-DC converter stage of FIG. 2, in accordance with various aspects described herein.

### DETAILED DESCRIPTION

Aspects of the disclosure can be implemented in any environment, apparatus, or method for a DC converter regardless of the function performed by the DC converter.

As used herein, the term "set" or a "set" of elements can be any number of elements, including only one. As used herein, the term "upstream" refers to a direction that is opposite a fluid flow or a current flow direction, and the term "downstream" refers to a direction that is in the same direction as the fluid flow or the current flow. Additionally, while terms such as "voltage", "current", and "power" can be used herein, it will be evident to one skilled in the art that these terms can be interrelated when describing aspects of the electrical circuit, or circuit operations.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured to provide, enable, disable, or the like, an electrical connection between respective elements. Additionally, as used herein, "electrical connection" or "electrically coupled" can include a wired or wireless connection. Additionally, as used herein, the term "coupled" in the context of "coupled inductors" can include a magnetic coupling, i.e., linked by electromagnetic induction. The exemplary drawings are for purposes of illustration only and the dimensions, positions, order and relative sizes reflected in the drawings attached hereto can vary.

As used herein, a "controller" or "controller module" can include a component configured or adapted to provide instruction, control, operation, or any form of communication for operable components to affect the operation thereof. A controller module can include any known processor, microcontroller, or logic device, including, but not limited to: field programmable gate arrays (FPGA), an application specific integrated circuit (ASIC), a full authority digital engine control (FADEC), a proportional controller (PC), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. Non-limiting examples of operable or executable instruction sets can include routines, programs, objects, components, data structures, algorithms, etc., that have the technical effect of performing particular tasks or implement particular abstract data types. In another non-limiting example, a controller module can also include a data storage component accessible by the processor, including memory, whether transient, volatile or non-transient, or non-volatile memory.

As used herein, a controllable switching element, or a "switch" is an electrical device that can be controllable to toggle between a first mode of operation, wherein the switch is "closed" intending to transmit current from a switch input to a switch output, and a second mode of operation, wherein the switch is "open" intending to prevent current from transmitting between the switch input and switch output. In non-limiting examples, connections or disconnections, such as connections enabled or disabled by the controllable switching element, can be selectively configured to provide, enable, disable, or the like, an electrical connection between respective elements.

Power converters can be employed to convert a Direct Current (DC) to an Alternating Current (AC), or from DC to DC, (i.e., DC-DC) or from AC to DC (i.e., AC-DC) as well as the voltage or frequency, or some combination of these. Conventional power converters are often made with one more conversion stages. For example, a DC-AC power converter (e.g., an inverter), can include two stages, first DC to DC conversion to make a DC voltage, followed by a DC to AC conversion which supplies an AC voltage a load. The conversion stages can also be arranged as a step-down or "buck" converter (e.g., a DC-DC power converter which steps down voltage received at its input (supply) to its output (load)). Alternatively, the conversion stages can also be arranged as a "boost" or step-up converter (e.g., a DC-DC power converter that steps up voltage from its input to its output). Still other converters can be arranged to selectively provide buck or boost modes.

Multi-level DC-DC converters are commonly employed in numerous applications, such as renewable energy systems, energy storage systems, uninterruptible power systems, and electric vehicles charging systems. As the demand for increased power densities continue to rise, interleaved boost converter designs provide a solution to keep input currents manageable and increase efficiency, while still maintaining acceptable power densities.

Conventional power converters, particularly boost converters, often employ topologies having interleaved, or multi-phased arrangements. Such arrangements result in increased efficiency, while maintaining power density and reducing the size of required filter components over other topologies. By splitting the current into two parallel paths, the conduction (i.e., heating) losses can be reduced, increasing overall efficiency compared to a non-interleaved converter. Because the currents from each respective path or phase are ultimately combined at an output capacitor, effective ripple frequency is doubled, making ripple voltage reduction much easier.

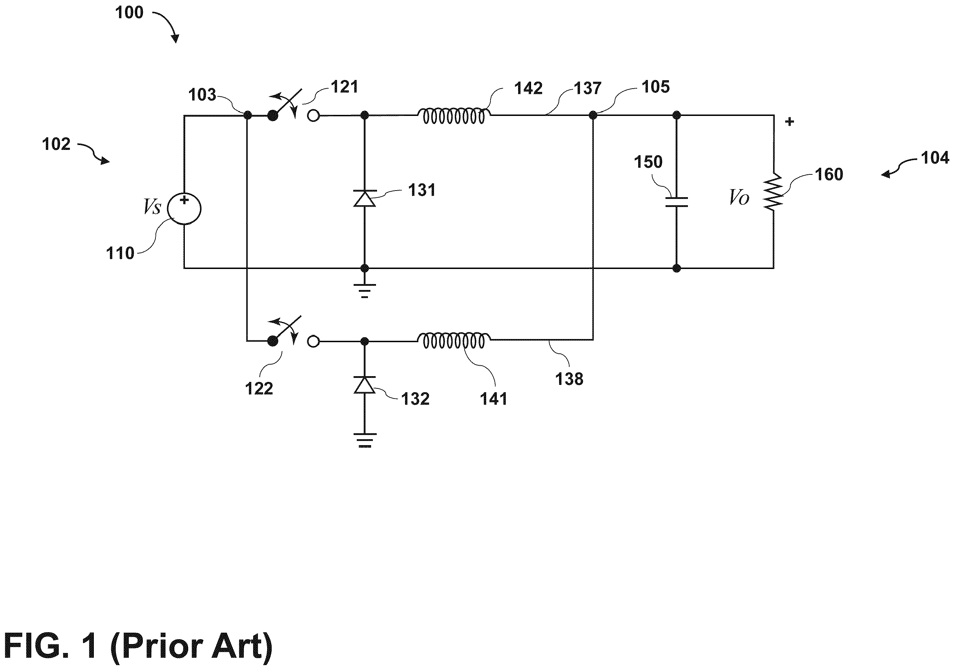

For example, FIG. 1 depicts a conventional single-phase interleaved buck converter circuit 100. While the interleaved circuit of FIG. 1 is shown and discussed, for ease of description and understanding, with respect to a buck-type converter circuit, it will be appreciated that the operation of a boost type converter circuit will be similar. The interleaved buck converter circuit 100 has an input side 102 and an output side 104. A DC power supply 110 is arranged to provide a DC voltage (designated Vs) at the input side 102. A load 160 is arranged at the output side 104 to receive an output voltage (designated Vo). Such circuits provide a symmetric parallel combination of a set of components, such as a set of switches, a set of blocking diodes, and a set of inductors, coupled to a common filter capacitor 150 at the output side 104.

For example, as shown in FIG. 1, the set of switches comprises a first switch 121 and a second switch 122. The first and second switches 121, 122 are coupled to a positive side of the DC power supply 110 at a first node 103 and electrically in parallel with each other. The set of inductors comprises a first inductor 141 and a second inductor 142. The first inductor 141 and second inductor 142 are coupled at a respective first end in series with a respective one of the first switch 121 and second switch 122. The first inductor 141 and second inductor 142 are coupled at a respective second end at a second node 105. Each corresponding first and second switch 121, 122 and first and second inductor 141, 142 thereby defines a respective interleaved first circuit path 137 and second circuit path 138 between the first node 103 and the second node 105. The set of blocking diodes comprises a first diode 131 and a second diode 132. The first diode 131 and second diode 132 are coupled between a respective circuit path 137, 138 and ground.

The switches are selectively operated in a conventional manner, for example by a controller or controller module (not shown), in an alternating manner with respect to each other between a conducting state and a non-conducting state. In this way, the parallel-connected first switch 121, and second switch 122 provide a respective current to a corresponding inductor of the first inductor 141 and second inductor 142. The respective inductor currents through the first inductor 141 and second inductor 142 will likewise be 180 electrical degrees out of phase. The common filter capacitor 150 is arranged in parallel with the load 160. The current entering the common filter capacitor 150 and load 160 will be the sum of the inductor currents (i.e., the current through each of the first inductor 141 and second inductor 142). The sum of the inductor currents will have a smaller peak-to-peak variation and a frequency twice as large as the individual inductor currents. This results in a smaller peak-to-peak variation in capacitor current than would be achieved with a non-interleaved (i.e., single) converter.

The output voltage Vo at the output side 104 of the circuit 100 is obtained by applying Kirchhoff's voltage law, around either the first circuit path 137 or second circuit path 138 including the DC power supply 110, a respective first switch 121, and second switch 122, and first inductor 141, and second inductor 142, and the output voltage Vo. The voltage across the respective first inductor 131 or second inductor 132 will be the difference between the source voltage Vs and the output voltage Vo, (i.e., Vs-Vo) with the respective first switch 121 or second switch 122 closed (i.e., conducting), and will be equal to: -Vo, with the respective switch open (i.e., non-conducting). Each respective first inductor 141 and second inductor 142 will supply one-half of the load current and output power, so the average inductor current will be one-half of what it would be for a non-interleaved or single buck converter.

While the description of the simple interleaved converter of FIG. 1 is described for ease of understanding, with a single interleaved converter, it will be appreciated that any desired number of converters can be interleaved. In multi-interleaved converter arrangements, the phase shift in electrical degrees between each respective switch closing is 360/n, where "n" is the number of converters in parallel configuration.

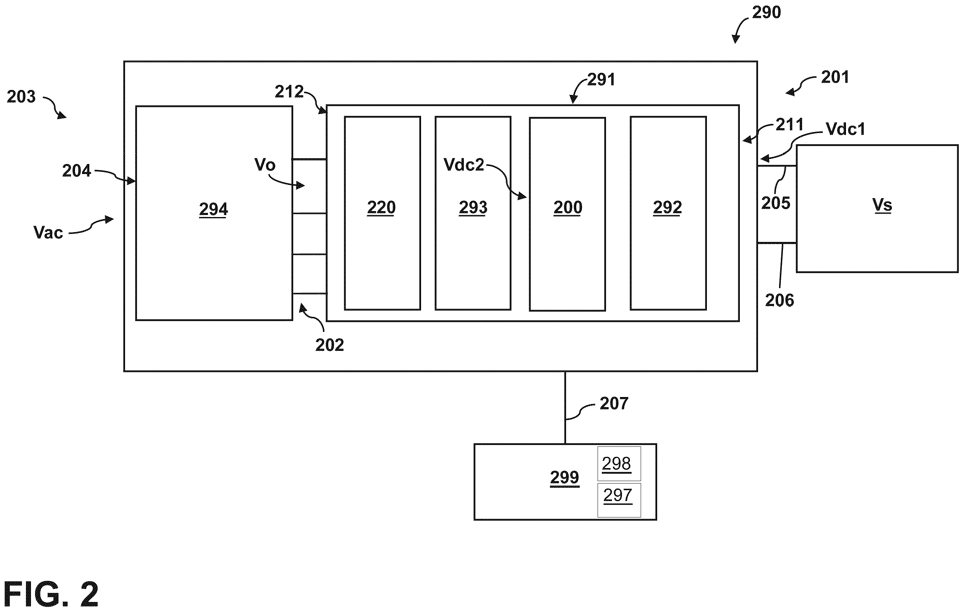

FIG. 2 depicts a DC-AC power converter or power inverter 290 in accordance with a non-limiting aspect. The power inverter 290 can define a first DC side 201 and a first AC side 203. The power inverter 290 can be coupled to a DC power source Vs (for example, a battery) on the first DC side 201. The power inverter 290 can include a DC-DC power converter stage 291 having a DC voltage output, and a DC-AC converter, i.e., an inverter stage 294 having an AC voltage output (designated Vac).

In a non-limiting aspect, the DC-DC power converter stage 291 can define an input side 211, and an output side 212. In an aspect, the input side 211 can define a low-voltage side, and the output side 212 can define a high-voltage side. It will be appreciated that the voltage on the low voltage input side 211 is lower than the voltage on the high voltage output side 212. The DC-DC power converter stage 291 can include a filter portion 292, a switching or DC-DC converter portion 200, a DC-link portion 293, and a coupled inductor portion 220, all electrically connected in sequence. In an aspect, the DC-DC converter stage 291 can also be in signal communication with the controller module 299.

The input side 211 of the DC-DC power converter stage 291 can be electrically coupled in series with the DC power source Vs. In an aspect, the power inverter 290 can be coupled electrically in series with the DC power source Vs by a set of conductive input lines 205, 206. For example, a first power input line 205 can provide a positive voltage phase from the DC power source Vs to the power inverter 290, and the second power input line 206 can provide a negative voltage phase from the DC power source Vs to the power inverter 290. In other aspects any number of power input lines can be included.

In an aspect, the filter portion 292 can be disposed electrically in series between the DC power source Vs and the DC-DC converter 200. The filter portion 292 can be coupled to the set of power input lines 205, 206. For example, the filter portion 292 can comprise a common-mode filter, such as a first set of inductors (not shown) electrically in series with the set of power input lines 205, 206. In some aspects, the filter portion 292 can further include a capacitor (not shown) arranged in parallel between the set of power input lines 205, 206. In this sense, the filter portion 292 can be operable as a passive filter 292.

The DC-DC converter portion 200 can be coupled in signal communication with the filter portion 292 to receive the DC voltage therefrom. The controller module 299 can include a processor 298 and a memory 297. As will be described in more detail herein, the DC-DC converter portion 200 can comprise a buck-type converter, a boost-type converter, or a buck/boost-type converter. Additionally, in aspects, the DC-DC-converter portion 200 can comprise a non-interleaved topology or an interleaved topology. In general, the DC-DC converter portion 200 is operative to receive a first DC voltage Vdc1 (from the power source Vs) at the input side, and to provide a second DC voltage Vdc2 to the DC-link portion 293. In the event the DC-DC power converter 291 is operative a boost-type converter, a first DC voltage Vdc1 is a lower voltage than second DC voltage Vdc2. In an aspect, the DC-DC converter portion 200 can be in signal communication with the controller module 299, for example via a communication line 207.

In an aspect, the DC-link portion 293 is disposed between the DC-DC converter portion 200 and the inverter stage 294. More specifically, the DC-link portion 293 is disposed between the DC-DC converter portion 200 and the coupled inductor portion 220. In an aspect, the DC-link portion 293 can comprise a set of capacitors (not shown). The set of capacitors (not shown) can be arranged electrically in parallel with the DC voltage source Vs. The DC-link portion 293 is operative as a filter to protect the inverter stage 294, for example from momentary voltage spikes, surges and EMI provided by the DC-DC converter portion 200.

The coupled inductor portion 220 is disposed at the output side 212 of the DC-DC power converter stage 291. In an aspect, coupled inductor portion 220 can be arranged electrically in series between the DC-link portion 293 and the inverter stage 294. In an aspect, coupled inductor portion 220 can comprise a second and a third set of coupled inductors (not shown).

The inverter stage 294 can define a second DC side 202, and a second AC side 204. The inverter stage 294 of power inverter 290 is electrically coupled in series at the second DC side 202 to the output side 212 of the DC-DC power converter stage 291 to receive the second DC voltage Vdc2 therefrom. The inverter stage 294 is operative to convert the second DC voltage Vdc2 received at the second DC side 202 to an AC voltage Vac at the second AC side 204.

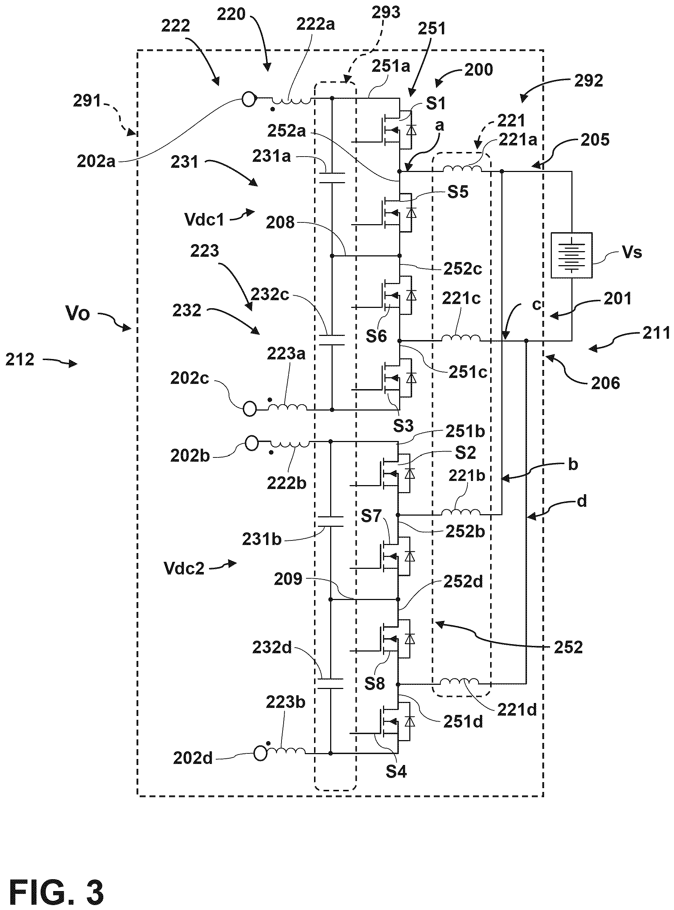

FIG. 3 provides a more detailed schematic diagram of a non-limiting aspects of the DC-DC power converter stage 291. The DC-DC power converter stage 291 of FIG. 3 is similar to the DC-DC power converter stage 291 of FIG. 2; therefore, like parts will be identified with like numerals.

As depicted in FIG. 3, the DC-DC power converter stage 291 comprises an input side 211 and an output side 212. The DC-DC power converter stage 291 includes the filter portion 292, the DC-DC converter portion 200, the DC-link portion 293 and the coupled inductor portion 220. The DC voltage source Vs can be coupled to the input side 211 of the DC-DC power converter stage 291.

The voltage source Vs can be coupled to a first set of input lines 205 defining positive phase legs (designated phase "a" and phase "b") arranged in parallel. For example, as shown, the positive voltage phase legs (a and b) are coupled to the positive side or output of the DC voltage source Vs. The voltage source Vs can be further coupled to a second set of input lines 206 defining negative voltage phase legs (designated phase "c" and phase "d") arranged in parallel. For example, as shown, the negative voltage phase legs (c and d) are coupled to the negative side of the DC voltage source Vs. Each of the interleaved voltage phase legs a - d terminate at a respective output terminal, designated 202a, 202b, 202c, and 202d, respectively. A DC output voltage Vo is defined at the output side 202. In an aspect, the DC output voltage Vo can comprise a first DC output voltage Vo1 taken with respect to phase a and phase c, (e.g., between output terminal 202a and output terminal 202c) and a second DC output voltage Vo2 taken with respect to phase b and phase d (e.g., between output terminal 202b and output terminal 202d). In an aspect, the first DC output voltage Vo1 can be equal to the second DC output voltage Vdc2.

The filter portion 292 can comprise a first set of inductors 221. For example, the first set of inductors 221 can comprise four inductors 221a, 221b, 221c, 221d electrically in parallel. The first set of inductors 221 can be arranged on the input side 211 of the DC-DC power converter stage 291, for example between the DC voltage source Vs and the DC-DC converter portion 200. Each inductor 221a, 221b, 221c, 221d of the first set of inductors 221 can be coupled in series with a respective phase leg a - d of the DC converter portion 200. For example, as shown, inductor 221a is coupled in series with positive phase leg a, inductor 221b is coupled in series with positive phase leg b, inductor 221c is coupled in series with negative phase leg c, and inductor 221d is coupled in series with negative phase leg d. In various aspects, the inductors 221a, 221b, 221c, 221d of the first set of inductors 221 can be magnetically independent with respect to each other. In other aspects, the inductors 221a, 221b, 221c, 221d of the first set of inductors 221 can be magnetically coupled with each other.

The DC-DC power converter stage 291 can also include the DC-DC converter portion 200 having a first set of switches 251 and a second set of switches 252 arranged between the filter portion 292 and the DC-link portion 293. In an aspect, the first and second sets of switches 251, 252 are arranged between the filter portion 292 and the coupled inductor portion 220.

In a non-limiting aspect, the first set of switches 251 can comprise four switches (designated S1, S2, S3, S4), and the second set of switches 252 can comprise four switches (designated S5, S6, S7, S8). The first set of switches 251 are selectively operative in a boost mode, and the second set of switches are selectively operative in a buck mode. The first set of switches 251 can be arranged to define four legs or paths electrically in parallel. For example, the first set of switches can define a first leg 251a coupled to phase a, a second leg 251b coupled to phase b, a third leg 251c coupled to phase c, and a fourth leg 251d coupled to phase d, each in parallel with one another. Likewise, the second set of switches 252 can be arranged to define four legs or paths electrically in parallel. For example, the second set of switches 252 can define a fifth leg 252a coupled to phase a, a sixth leg 252b coupled to phase b, a seventh leg 252c coupled to phase c, and an eighth leg 252d coupled to phase d, each in parallel with one another.

The DC-DC converter portion 200 can be selectively operated by the controller module (not shown) in a buck mode or a boost mode. For example, in a boost mode, the first set of switches 251 can be iteratively operated in an alternating manner with the second set of switches 252 remaining in an open or non-conducting state. Alternatively, in a buck mode, the second set of switches 252 can be iteratively operated in an alternating manner with the first set of switches 251 remaining in an open or non-conducting state. The interleaved topology thus allows for similar operation regardless of whether the power converter 200 is operative in the buck or boost mode. Additionally, in other aspects, the switches S1-S8 of the first and second sets of switches 251, 252 can alternatively be operated in any other desired switching sequences or switching on-times to obtain a desired output voltage Vo, For example, the switches S1-S8 of the first and second sets of switches 251, 252 can alternatively be selectively operated according to a predetermined sequence and duration to produce a desired voltage waveform of each of the respective phases or a desired voltage Vdc1 and Vdc2 at the output 202 of the DC-DC power converter stage 291.

For ease of description and understanding, the first and second sets of switches 251, 252 are symbolically depicted in a conventional manner as a diode connected across each switch. However, it will be appreciated that the switches S1-S8 can comprise any desired type or combination of actively controlled switches, such as metal oxide semiconductor field-effect transistors (MOSFETs), insulated gate bipolar transistors (IGBTs), bipolar junction transistors (BJTs), Thyristors, silicon controlled rectifiers (SCRs), gate turnoff thyristors (GTOs), integrated gate-commutated thyristor (IGCTs), etc., or a combination of active switches and passive switches, such as PiN diodes, schottky diodes, etc. Additionally, it will be understood by those of ordinary skill in the art that the switches S1-S8 can be controlled and operated as described herein via the conventional controller device or module (not shown) arranged in signal communication via a communication line (not shown) with the first and second sets of switches 251, 252.

In an aspect, the DC-link portion 293 can comprise a first and a second set of capacitors 231, 232. The first set of capacitors 231 and the second set of capacitors 232 of the DC-link portion 293 can be arranged as conventional DC-link capacitors coupled to the DC-DC converter portion 200. For example, the first and second sets of capacitors 231, 232 can be arranged electrically in parallel with the DC voltage source Vs. In an aspect, each DC link capacitor can be placed between the DC-DC power converter stage 200 and the coupled inductor portion 220. In an aspect, the first set of capacitors 231 can comprise two capacitors 231a, 231c, and the second set of capacitors 232 can comprise two capacitors 232b, 232d. The two capacitors231a, 231c of the first set of capacitors 231 can be arranged electrically in series, and the two capacitors 232b, 232d of the second set of capacitors 232 can be arranged electrically in series. In a non-limiting aspect, a capacitor divider can be defined via conductive line 208 coupled between the capacitors 231a, 231c of the first set of capacitors 231 and between a pair of switches S5, S6 of the second set of switches 252. Similarly, in a non-limiting aspect, a capacitor divider can be defined via conductive line 209 coupled between two capacitors 232b, 232d of the second set of capacitors 232 and between the remaining pair S7, S8 of the second set of switches 252.

The coupled inductor portion 220 of the DC-DC power converter stage 291 can comprise a second set of coupled inductors 222 and third set of coupled inductors 223. In an aspect, the second set of coupled inductors 222 can comprise two coupled inductors 222a, 222b, and the third set of coupled inductors 223 can comprise two coupled inductors 223a, 223b. In an aspect, the second and third sets of coupled inductors 222, 223 are electrically connected between the DC-link portion 293 and the inverter stage 294. In an aspect, the second and third sets of coupled inductors 222, 223 can be disposed on the output side 212 of the DC-DC converter stage. In an aspect, the output side 212 of DC-DC power converter stage 291 is the high-voltage side of the DC-DC power converter stage 291 (that is, at a higher voltage than the input side 211). For example, in a non-limiting aspect, the voltage at input side 211 of the DC-DC power converter stage 291 can be 480Volts DC, and the voltage at the output side 212 of the DC-DC power converter stage 291 can be at 1200 Volts DC.

Each coupled inductor 222a, 222b, 223a, 223b of the second set of coupled inductors 222 and the third set of coupled inductors 223 is electrically coupled with a respective phase leg (that is, one of phase legs "a", "b", "c", and "d") of the DC-DC power converter stage 291 to receive a respective positive or negative phase voltage therefrom. For example, as depicted in FIG. 3, coupled inductor 222a is electrically coupled with phase leg "a", coupled inductor 223a is electrically coupled with phase leg "c", coupled inductor 222b is electrically coupled with phase leg "b", and coupled inductor 223b is electrically coupled with phase leg "d". Accordingly, it can be seen that each coupled inductor 222a, 222b, 223a, 223b of the second and third sets of coupled inductors 222, 223 is electrically coupled with a corresponding inductor 221a-221d of the first set of inductors 221. For example, coupled inductor 222a is electrically coupled with inductor 221a, coupled inductor 223a is electrically coupled with coupled inductor 221c, coupled inductor 222b is electrically coupled with inductor 221c, and coupled inductor 223b is electrically coupled with inductor 221d.

Additionally, as can be seen, each inductor 222a, 222b, 223a, 223b of the second and third sets of coupled inductors 222, 223 can be electrically coupled at a respective first end to the DC-link portion 293, and electrically coupled at a second end to a corresponding output terminal 202a, 202b, 202c, 202d of the DC-DC power converter stage 291

For ease of understanding, as shown in the drawings, a conventional "dot" depicted adjacent to a conventional coupled inductor winding symbol is used to indicate the polarity of a given winding. As will be understood, the term "polarity" refers to the relative direction of the induced voltages between the primary and secondary windings at any given moment in the AC cycle, and the voltage drop from polarity to non-polarity across one winding is essentially in phase with the voltage drop from polarity to non-polarity across the other winding(s). Thus, a positively increasing current in the dotted terminal of one winding induces a positive voltage at the dotted terminal of the other corresponding winding. When a first current flows into the dotted end of a coupled inductor being coupled, a return current should flow out of the dotted end of the corresponding coupled inductor.

In various aspects, the coupling coefficient between the coupled inductors of the second set of coupled inductors 222, and the coupled inductors of the third set of coupled inductors 223 can range from 0 to 1 which will result in a reduced DC flux of the core legs surrounded by the corresponding coupled inductors of the second and third sets of coupled inductors. This enables a reduction in the size of the coupled inductor cores, and consequently a reduction in size of the coupled inductors.

While conventional of DC-DC converters having interleaved legs are effective at reducing current ripple at the output, they can also result in an undesired circulating current between the interleaved legs. Accordingly, the coupled inductor portion 220 is operative to reduce the circulating differential mode current between the interleaved phase legs. For example, the second and third sets of coupled inductors 222, 223 are operative to reduce a circulating current among first and second set of switches 251, 252, as well as to limit the ripple current in each respective switch S1-S8.

Further, by arranging the second and third sets of coupled inductors at the output side 212 (that is, the high voltage side) of the DC-DC power converter stage 291, the differential mode current through the coupled inductors 222a, 222b, 23a, 223b will be reduced from coupled inductor assemblies arranged on the input side 211 (that is, the low voltage side) of the DC-DC power converter stage 291. By reducing the differential mode current load through each coupled inductor 222a, 222b, 23a, 223b of the first and second sets of coupled inductors 222, 223, the inductors 222a, 222b, 23a, 223b can be made using smaller diameter windings, and thereby result in smaller and less costly inductors than conventional coupled inductor assemblies.

Moreover, by arranging the second and third sets of coupled inductors 222, 223 at the output side 212 of the DC-DC power converter stage 291, downstream of the DC-link portion 293, an equivalent common-mode is additionally arranged thereby. The second and third sets of coupled inductors 222, 223 would thus result in reduced electro-magnetic interference and reduced common-mode voltage in the DC-DC. The aspects disclosed herein provide an improved interleaved DC-DC boost converter. The technical effect is that the above described aspects enable reduced circulating current and ripple current the DC-DC converter stage. One advantage that can be realized in the above aspects is that the above described aspects smaller and less costly coupled inductors, and hence, smaller and less costly DC-DC power converters and inductors can be used, as compared with conventional systems.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

The features disclosed in the foregoing description, in the following claims and/or in the accompanying drawings may, both separately and in any combination thereof, be material for realising aspects in diverse forms thereof.

Further aspects of the invention are provided by the subject matter of the following clauses:

A DC-DC power converter having a set of interleaved positive and negative voltage phase legs, comprising: a filter portion comprising first set of inductors at a low voltage input of the DC-DC power converter; a DC-DC converter portion comprising a first set of switches and a second set of switches coupled to the filter portion; a DC-link portion coupled to the DC-DC converter portion, comprising a first and a second set of capacitors; and a coupled inductor portion coupled to the DC-link portion at a high voltage output of the DC-DC power converter, comprising a second set of coupled inductors, each coupled inductor of the second set of coupled inductors electrically in series with a respective inductor of the first set of inductors.

The DC-DC power converter the preceding clause, wherein the first set of switches is coupled to a positive voltage phase of the DC-DC converter.

The DC-DC power converter of any of the preceding clauses, wherein the second set of switches is coupled to a negative voltage phase leg of the DC-DC power converter.

The DC-DC power converter of any of the preceding clauses, wherein the switches of the first set of switches are switched in an alternating manner.

The DC-DC power converter of any of the preceding clauses, wherein the switches of the second set of switches are switched in an alternating manner.

The DC-DC power converter of any of the preceding clauses, wherein each inductor of the first set of inductors is electrically coupled in series with a respective voltage phase leg of the DC-DC power converter.

The DC-DC power converter of any of the preceding clauses, wherein each inductor of the second set of inductors is electrically coupled at a respective first end to the dc-link portion, and at a respective second end to an output terminal of the DC-DC power converter.

The DC-DC power converter of any of the preceding clauses, wherein the coupled inductor portion further comprises a third set of inductors.

The DC-DC power converter of any of the preceding clauses, wherein each inductor of the third set of inductors is electrically coupled at a respective first end to the dc-link portion, and at a respective second end to an output terminal of the DC-DC power converter.

The DC-DC power converter of any of the preceding clauses, wherein each inductor of the second of inductors is electrically coupled in series with a respective voltage phase leg of the DC-DC power converter, and each inductor of the third set of inductors is electrically coupled in series with a respective voltage phase leg of the DC-DC power converter.

A power inverter comprising: a DC-DC power converter stage having a set of positive and negative voltage phase legs, the DC-DC power converter stage having: a filter portion comprising first set of inductors at a low-voltage input side of the DC-DC power converter; a DC-DC converter portion comprising a first set of switches and a second set of switches coupled to the filter portion; a DC-link portion coupled to the DC-DC converter portion, comprising a first and a second set of capacitors; and a coupled inductor portion coupled to the DC-link portion at a high-voltage output side of the DC-DC power converter, comprising a second set of coupled inductors, each coupled inductor of the second set of coupled inductors electrically in series with a respective inductor of the first set of inductors; and an inverter stage electrically connected with the coupled inductor portion to receive a DC voltage output therefrom.

The power inverter of the preceding clause, wherein the first and second set of switches is coupled to a respective voltage phase leg of the DC-DC converter.

The power inverter of any of the preceding clauses, wherein the second set of switches is coupled to a second electrical phase of the DC-DC converter.

The power inverter of any of the preceding clauses, wherein the switches of the first set of switches are switched in an alternating manner.

The power inverter of any of the preceding clauses, wherein the switches of the second set of switches are switched in an alternating manner.

The power inverter of any of the preceding clauses, wherein each inductor of the first set of inductors is electrically coupled in series with a respective voltage phase leg of the DC-DC power converter.

The power inverter of any of the preceding clauses, wherein each inductor of the second set of inductors is electrically coupled at a respective first end to the dc-link portion, and at a respective second end to an output terminal of the DC-DC power converter.

The power inverter of any of the preceding clauses, wherein the coupled inductor portion further comprises a third set of inductors.

The power inverter of any of the preceding clauses, wherein each inductor of the third set of inductors is electrically coupled at a respective first end to the dc-link portion, and at a respective second end to an output terminal of the DC-DC converter.

The power inverter of any of the preceding clauses, wherein each inductor of the second of inductors is electrically coupled in series with a respective voltage phase leg of the DC-DC power converter, and each inductor of the third set of inductors is electrically coupled in series with a respective voltage phase leg of a second phase of the DC-DC power converter.

## Claims

1. A DC-DC power converter (291) having a set of interleaved positive and negative voltage phase legs (a, b, c, d), comprising:
a filter portion (292) comprising first set of inductors (221) at a low voltage input 211 of the DC-DC power converter (291);
a DC-DC converter portion (220) comprising a first set of switches (251) and a second set of switches (252) coupled to the filter portion (292);
a DC-link portion (293) coupled to the DC-DC converter portion (220), comprising a first and a second set of capacitors (231, 232); and
a coupled inductor portion (220) coupled to the DC-link portion (293) at a high voltage output (212) of the DC-DC power converter (291), comprising a second set of coupled inductors (222), each coupled inductor (222a, 222b) of the second set of coupled inductors (222) electrically in series with a respective inductor (221a, 221b) of the first set of inductors (221).

2. The DC-DC power converter (291) of claim 1, wherein the first set of switches (251) is coupled to a positive voltage phase leg (a, b) of the DC-DC converter.

3. The DC-DC power converter (291) of any preceding claim, wherein the second set of switches (252) is coupled to a negative voltage phase leg (c, d) of the DC-DC power converter.

4. The DC-DC power converter (291) of any preceding claim, wherein each inductor (221a, 221b, 221c, 221d) of the first set of inductors (221) is electrically coupled in series with a respective voltage phase leg (a, b, c, d) of the DC-DC power converter (291).

5. The DC-DC power converter (291) of any preceding claim, wherein each inductor 222a, 222b) of the second set of inductors (222) is electrically coupled at a respective first end to the dc-link portion (293), and at a respective second end to an output terminal (202a, 202b) of the DC-DC power converter (291).

6. The DC-DC power converter (291) of any preceding claim, wherein the coupled inductor portion (220) further comprises a third set of inductors (223).

7. The DC-DC power converter (291) of claim 6, wherein each inductor (223a, 223b) of the third set of inductors (223) is electrically coupled at a respective first end to the dc-link portion (293), and at a respective second end to an output terminal (202c, 202d) of the DC-DC power converter (291).

8. The DC-DC power converter (291) of claim 6 or 7, wherein each inductor (222a, 222b) of the second of inductors (222) is electrically coupled in series with a respective voltage phase leg (a, b) of the DC-DC power converter (291), and each inductor (223a, 223b) of the third set of inductors (223) is electrically coupled in series with a respective voltage phase leg (c, d) of the DC-DC power converter (291).

9. A power inverter (290) comprising:
a DC-DC power converter stage (291 having a set of positive and negative voltage phase legs (a, b, c, d), the DC-DC power converter stage (291) having:
a filter portion (292) comprising first set of inductors (221) at a low-voltage input side (211) of the DC-DC power converter (291);
a DC-DC converter portion (200) comprising a first set of switches (251) and a second set of switches (252) coupled to the filter portion (292);
a DC-link portion (293) coupled to the DC-DC converter portion (200), comprising a first and a second set of capacitors (231, 232); and
a coupled inductor portion (220) coupled to the DC-link portion (293) at a high-voltage output side (212) of the DC-DC power converter (291), comprising a second set of coupled inductors (222), each coupled inductor (222a, 222b) of the second set of coupled inductors (222) electrically in series with a respective inductor (221a, 221b) of the first set of inductors (221); and
an inverter stage (294) electrically connected with the coupled inductor (220) portion to receive a DC voltage output (Vo) therefrom.

10. The power inverter (290) of claim 9, wherein the first and second set of switches (251, 252) is coupled to a respective voltage phase leg (a, b, c, d) of the DC-DC converter.

11. The power inverter (290) of claim 9 or 10, wherein each inductor (221a, 221b, 221c, 221d) of the first set of inductors (221) is electrically coupled in series with a respective voltage phase leg (a, b, c, d) of the DC-DC power converter (291).

12. The power inverter (290) of any of claims 9 to 11, wherein each inductor (222a, 222b) of the second set of inductors (222) is electrically coupled at a respective first end to the dc-link portion (293), and at a respective second end to an output terminal (202a, 202b) of the DC-DC power converter (291).

13. The power inverter (290) of any of claims 9 to 12, wherein the coupled inductor portion (220) further comprises a third set of inductors (223).

14. The power inverter (290) of claim 13, wherein each inductor (223a, 223b) of the third set of inductors (223) is electrically coupled at a respective first end to the dc-link portion (293), and at a respective second end to an output terminal (202c, 202d) of the DC-DC converter (291).

15. The power inverter (290) of claim 13 or 14, wherein each inductor (222a, 222b) of the second of inductors (222) is electrically coupled in series with a respective voltage phase leg (a, b) of the DC-DC power converter (291), and each inductor (223a, 223b) of the third set of inductors (223) is electrically coupled in series with a respective voltage phase leg (c, d) of the DC-DC power converter (291).
